# EUROPEAN PATENT SPECIFICATION

(11) **EP 4 133 976 B1**
(45) Date of publication and mention of the grant of the patent: **08.04.2026**
(21) Application number: 22191926.9
(22) Date of filing: 12.11.2019
(51) Int. Cl.: A47J 37/12

(54) **A METHOD FOR DEEP FRYING A FOOD PRODUCT, AS WELL AS A DEEP FRYING DEVICE**
VERFAHREN ZUM FRITTIEREN EINES LEBENSMITTELPRODUKTES SOWIE EIN FRITTIERGERÄT
PROCÉDÉ DE FRITURE DE PRODUIT ALIMENTAIRE, AINSI QU'UN DISPOSITIF DE FRITURE

(30) Priority: 16.11.2018 NL 2022010
(43) Date of publication of application: 15.02.2023
(62) Divisional of application: 19817431.0
(73) Proprietor: D.N.A. Holding B.V., 3443 BH Woerden (NL)
(72) Inventor: VAN DEN BOSCH, Petrus Wessel, 3443 BH Woerden (NL)
(74) Representative: Dogio Patents B.V.

(56) References cited:
- EP-A1- 0 745 345
- EP-A1- 2 371 250
- US-A- 4 949 703

## Description

The present invention relates to a method for deep frying a food product in a deep frying device in accordance with the preamble of claims 1 and 9 Such a method and device is disclosed in US 4,949,703.

The deep frying device
- is arranged for heating fat using flue gas, and
- comprises a container, which container comprises wall sections, which wall sections comprise at least
- a bottom wall section,
- a front wall section,
- a rear wall section, and
- two upright longitudinal wall sections which interconnect said front wall section and rear wall section, and the wall sections define a lumen of the container;

wherein the container contains a fat; and
wherein, in order to deep fry the food product, the fat is heated using a burner, and the food product is deep fried in the heated fat.

Such a method is well known in the art for making fries, snacks and the like. During deep frying heat must be supplied. Firstly, in order to raise the temperature of the food product that mostly comes from the refrigerator or is at room temperature. Secondly, because during deep frying water vapour escapes from the food product, which costs a lot of energy.

For deep frying a container with fat is used. The container is usually heated at the bottom with a burner wherein the combustion gases flow from a first side of the container along the bottom side of the container to an opposite second side of the container for releasing heat to the container and thereby to the fat. A problem is that the temperature of the bottom of the container may become hot to such an extent that crumbs or the like of the food product that end up on the bottom will pyrolyse there and form harmful substances which may end up in the food product.

A deep frying device is known which comprises a couple of channels, which channels connect a first upright wall and an opposite second upright wall and are interconnected at the second upright wall. Herewith, combustion gases, after having passed the bottom, flow from the first upright wall via a first channel to the second upright wall and from the second upright wall via the second channel back again to the first upright wall where the combustion gases are discharged. The enlarged heat exchanging surface ensures that the heat difference between the heat supplying surfaces and the fat can be smaller, thus reducing the chances of pyrolysis of fat and/or food particles coming from the food to be fried.

A problem with the known deep frying device is that, in case a repair is needed for example due to cracking, this will be very time consuming. This means that the operating time is shorter and thus there will also be a loss of turnover.

It is an object of the present invention to provide a method that can be used for deep frying effectively, but which method reduces wear of the frying device.

To this end, a method according to claim 1 and a device according to claim 9 is provided. wherein the wall unit of the heating section which closes of the through opening of the main wall section comprises both the outlet for relatively cold flue gas, the inlet for the relatively hot flue gas.

In the device of US 4,949,703, the wall unit which closes of the through opening of the main wall section does not comprise the inlet of the relatively hot flue gas. Instead, the burner (combustion chamber 31) is attached between the wall unit and the inlet for relatively hot flue gas. Thereby in the device of US 4,949,703, the burner is submerged in the heated fat during use. The heating section is less easy to remove thereby.

The container comprises a main wall section selected from
- the bottom wall section,
- the front wall section,
- the rear wall section, and
- an upright longitudinal wall section;
   the deep frying device comprises a heating section, wherein the heating section comprises
- a wall unit, and
- a pipe section;
   wherein the wall unit comprises an inlet for relatively hot flue gas and an outlet for relatively cold flue gas, and the pipe section protrudes from the main wall section into the lumen and is not rigidly connected to the other wall sections;
   and wherein the pipe section protruding into the lumen of the container comprises
- at least one supply pipe for the relatively hot flue gas, and
- at least one outlet pipe for the relatively cold flue gas coming from the at least one supply pipe;

wherein for heating the fat hot flue gas is passed via the inlet of the wall unit through the pipe section and discharged via the outlet of the wall unit,
wherein the heating section has the form of a heating module which is detachably attached to the main wall section, and
wherein the main wall section comprises a through opening and the through opening of the main wall section is closed off with the wall unit.

By deep frying using such a deep frying device the chances of damaging the deep frying device by deep frying are limited and an improved availability is achieved since the deep frying device will break down less quickly because of the daily changing temperatures.

Any contact between flames and the container and thus locally very high temperatures which can lead to pyrolysis, can be effectively avoided. Furthermore, it is possible to work with an enlarged heat exchanging surface without losing the ability to clean the inside of the surface of the container. Thanks to the enlarged heat exchanging surface, the fat can be heated quickly and will last a long time, also because pyrolysis is limited effectively.

The heat exchanging surface area of the heating section is preferably at least of the same size as the surface area of the bottom section, advantageously at least twice as big and more advantageously at least three times as big.

Preferably, the pipe section is not at all connected to the other wall sections and most preferably also not in contact therewith. In that case the wall unit (and more specifically the pipe section) has a free distal end.

If the heat exchanging surface of the heating section shows a crack or has to be cleaned, the fat can be removed from the container and subsequently the heating section can be taken out quickly and easily. If so desired, the heating section can be replaced by another heating section as a result of which the deep frying device can be put into operation again immediately.

The heating module may for example be hung over the edge of the container.

Also, inserting a basket with fries or other product to be deep fried is not hindered.

According to a favourable embodiment, the main wall section is selected from
- the bottom wall section,
- the front wall section, and
- an upright longitudinal wall section.

These have a better accessibility than the rear wall section, as a result of which replacement is easier. The main wall section is preferably the front wall section. Thus, an optimal accessibility is provided and the down time in case of a repair can be limited.

According to a favourable embodiment, the total of the cross sectional flow surface areas of the supply pipes is greater than the total cross sectional flow surface areas of the at least one outlet pipe.

A pipe for flue gas has an internal cross section and the surface area thereof is the cross sectional flow surface area of the pipe. With this favourable embodiment the hot flue gas flows through the supply pipes relatively slowly and can release heat well.

After it has cooled down it flows relatively quickly through the outlet pipe in order to be discharged, usually to a flue duct.

The heating section has the form of a heating module which is detachably attached to the main wall section.

If the heat exchanging surface of the heating section shows a crack or has to be cleaned, the fat can be removed from the container and subsequently the heating section can be taken out quickly and easily. If so desired, the heating section can be replaced by another heating section as a result of which the deep frying device can be put into operation again immediately.

The heating module may for example be hung over the edge of the container.

The main wall section comprises a through opening and the through opening of the main wall section is closed off with the wall unit.

Thus, inserting a basket with fries or other product to be deep fried is not hindered.

According to a favourable embodiment, a gasket is provided between the wall and the heating section.

The gasket usually comprises a temperature resistant and preferably resilient material.

According to a favourable embodiment, the gasket is a gasket that comprises graphite.

It has been found that this works well with the changing temperature circumstances that occur on a daily basis.

According to a favourable embodiment, the deep frying device contains a further inlet and a further outlet for guiding flue gas at the outside of a wall section, which further inlet is provided with a first connecting element and the outlet of the heating section is provided with a second connecting element for detachably connecting the outlet of the wall unit to the first connecting element.

Thus, an energy saving can be attained.

This favourable embodiment also makes it possible to discharge the flue gas at the back side or side of the deep frying device, as is common practice.

Advantageously, the deep frying device comprises a double wall comprising at least one of the wall sections as a wall, and the further inlet offers access for flue gas to the space between the walls of the double wall.

According to a favourable embodiment, at least one supply pipe of a plurality of supply pipes is provided with a plurality of channels provided transverse to the longitudinal direction of the supply pipe, which channels
- extend from the outer wall of the supply pipe via the inside of the supply pipe to an opposite part of the outer wall of the supply pipe
- comprise a first end situated relatively low and a second end situated relatively high in order to be able to pass fat from the lumen through the channel.

The channels enlarge the heat exchanging surface and fat heated by flue gas will rise in the channels and thus enable an even and quick heating.

Finally, the present invention relates to deep frying device in accordance with claim 9.

The deep frying device is arranged for heating flue gas using fat and comprises a container, which container comprises wall sections, which wall sections comprise at least
- a bottom wall section,
- a front wall section,
- a rear wall section,
- two upright longitudinal wall sections which interconnect said front wall section and rear wall section,
and the wall sections define a lumen of the container.

A problem with the known deep frying device is that in case a repair is needed, for instance when crack formation occurs, this is very time consuming. This means that the operating time will be less and thus implies a loss of turnover.

The present invention aims to provide a deep frying device having an improved availability.

Also, inserting a basket with fries or other product to be deep fried is not hindered. The container comprises a main wall section selected from
- the bottom wall section,
- the front wall section, and
- an upright longitudinal wall section;
   wherein the heating section comprises
- a wall unit, and
- a pipe section;
   wherein the wall unit comprises an inlet for relatively hot flue gas and an outlet for relatively cold flue gas, and the pipe section protrudes from the main wall section into the lumen and is not rigidly connected to the other wall sections;
   and wherein the pipe section protruding into the lumen of the container comprises
- at least one supply pipe for the relatively hot flue gas, and
- at least one outlet pipe for the relatively cold flue gas coming from the at least one supply pipe,

wherein the heating section has the form of a heating module which is detachably attached to the main wall section, and
wherein the main wall section comprises a through opening and the through opening of the main wall section is closed off with the wall unit.

Thus, a deep frying device is provided with which fat can be heated effectively while damage to the device by deep frying is limited.

If the heat exchanging surface shows a crack or has to be cleaned, the fat can be removed from the container and subsequently the heating section can be taken out quickly and easily. If so desired, the heating section can be replaced by another heating section as a result of which the deep frying device can be put into operation again immediately.

The heating module may for example be hung over the edge of the container.

According to a favourable embodiment, the main wall section is selected from
- the bottom wall section,
- the front wall section, and
- an upright longitudinal wall section.

These have a better accessibility than the rear wall section, as a result of which replacement is easier. The main wall section is preferably the front wall section. Thus, an optimal accessibility is provided.

According to a favourable embodiment, the total of the cross sectional flow surface areas of the supply pipes is larger than the cross sectional flow surface areas of the outlet pipe.

A pipe for flue gas has an internal cross section and the surface area thereof is the cross sectional flow surface area. Thus, the hot flue gas flows through the supply pipes relatively slowly and can release heat well.

After it has cooled down it flows relatively quickly through the outlet pipe in order to be discharged, usually to a flue.

The present invention also relates to a deep frying device with the measures of the subclaims described for the method only or in any combination, which for the sake of brevity will not be repeated.

The heating section has the form of a heating module which is detachably attached to the main wall section.

If the heat exchanging surface shows a crack or has to be cleaned, the fat can be removed from the container and subsequently the heating section can be taken out quickly and easily. If so desired, the heating section can be replaced by another heating section as a result of which the deep frying device can be put into operation again immediately.

The heating module may for example be hung over the edge of the container.

The main wall section comprises a through opening and the through opening of the main wall section is closed off with the wall unit.

Thus, inserting a basket with fries or other product to be deep fried is not hindered.

According to a favourable embodiment, between the wall and the heating section a gasket is provided.

The gasket usually comprises a temperature resistant and preferably resilient material.

According to a favourable embodiment, the gasket is a gasket that comprises graphite.

It has been found that this works well with the changing temperature circumstances that occur on a daily basis.

According to a favourable embodiment, at least one supply pipe of a plurality of supply pipes is provided with a plurality of channels provided transverse to the longitudinal direction of the supply pipe, which channels
- extend from the outer wall of the supply pipe via the inside of the supply pipe to an opposite part of the outer wall of the supply pipe
- comprise a first end situated relatively low and a second end situated relatively high in order to be able to pass fat from the lumen through the channel.

The channels enlarge the heat exchanging surface and fat heated by flue gas will rise in the channels and thus enable an even and quick heating. Preferably, all supply pipes will be provided with such channels.

Advantageously, the outlet pipe is also provided with corresponding channels.

The present invention will now be illustrated with reference to the drawing where
Fig. 1A shows a perspective view of a deep frying device according to the invention;
Fig. 1B shows an explosion view of the deep frying device of Fig. 1A;
Fig. 2A and Fig. 2B show a perspective view of a heating module of the deep frying device of Fig. 1B; and
Fig. 3A and Fig. 3B show a perspective front view and rear view of an alternative heating section for a deep frying device.

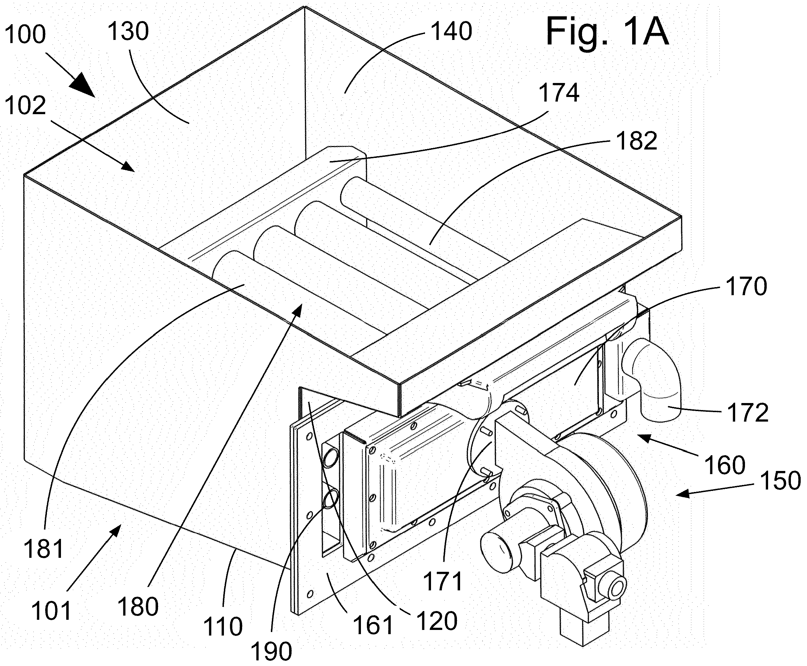

For deep frying a food product with the method according to the invention use is made of a deep frying device 100 (Fig. 1A), wherein the deep frying device 100 comprises a container 101, which container comprises wall sections, which wall sections comprise at least
- a bottom wall section 110,
- a front wall section 120,
- a rear wall section 130,
- two upright longitudinal wall sections 140 which interconnect said front wall section 120 and rear wall section 130. The container 101 defines a lumen 102 in which for deep frying fat (also including oil; a fat that is liquid at room temperature) is present.

The device 100 further comprises a burner 150 with which a fuel such as gas is burned, and the hot flue gases are used for heating the fat in order to deep fry therewith.

The deep frying device 100 comprises a main wall section selected from
- the bottom wall section 110,
- the front wall section 120, and
- an upright longitudinal wall section 140.

The deep frying device 100 further comprises a heating section 160, which heating section 160 comprises
- a wall unit 170, and
- a pipe section 180.

The wall unit 170 comprises an inlet 171 for relatively hot flue gas and an outlet 172 for relatively cold flue gas. The inlet 171 is connected to the burner 150 in order to lead hot flue gases through the pipe section 180 and discharge them via the outlet 172.

The burner 150 is a venturi burner, as is known from a central heating installation.

The pipe section 180 protrudes from the main wall section into the lumen 102 but is not connected fixedly to the other wall sections.

The pipe section 180 which protrudes into the lumen of the container comprises
- a plurality of supply pipes 181 for the relatively hot flue gas, and
- at least one outlet pipe 182 for the relatively cold flue gas coming from
the plurality of supply pipes 181.

The flue gas is distributed from an upstream distribution chamber 173 and collected in the downstream collection chamber 174 from which it is discharged via the outlet pipe 182 via the outlet 172. Prior to use, the outlet pipe 182 is connected to a flue (not shown) of the kitchen or other room in which the deep frying takes place.

With the embodiment of the deep frying device 100 as discussed here, the heating section 160 has the form of a heating module 160, which can be attached to the main wall section (here front wall section 120). To this end, the heating section 160 comprises a flange 161 which can be attached to the front wall section 120 using bolts and protrudes into the front wall section into the lumen 102 via a through opening 121.

In the device of US 4,949,703, the flange is attached to the interior of the container wall, and the heating section thereby does not protrude through the through opening in the container wall. The heating section is less easy to remove thereby.

The module may be equipped with one or more temperature sensors 190 for controlling the burner 150.

For sealing use is made of a graphite-comprising gasket between the flange 161 and the front wall section 120.

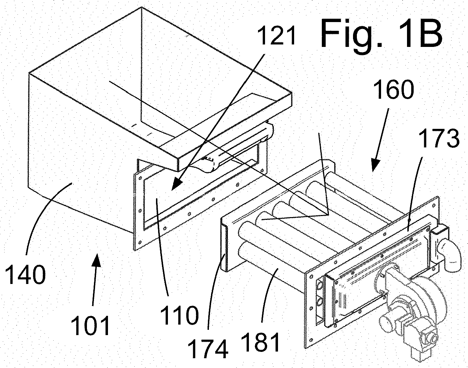

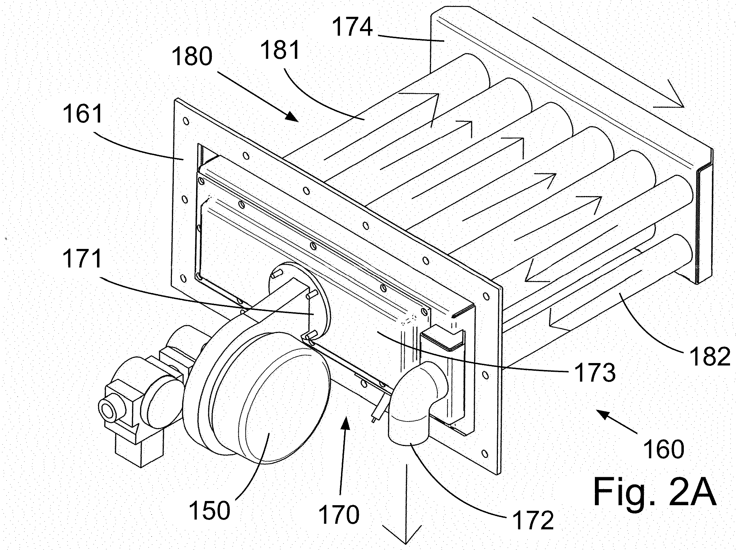

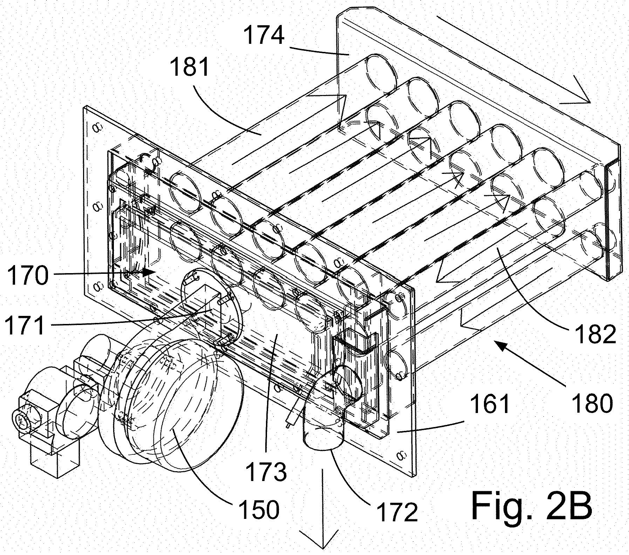

Fig. 2A and Fig. 2B (with hidden lines) show a perspective view of a heating module of the deep frying device 100 of Fig. 1B.

The heating module 160 also comprises the burner 150, whereby if a repair is needed the broken down heating module 160 can be replaced quickly by another one.

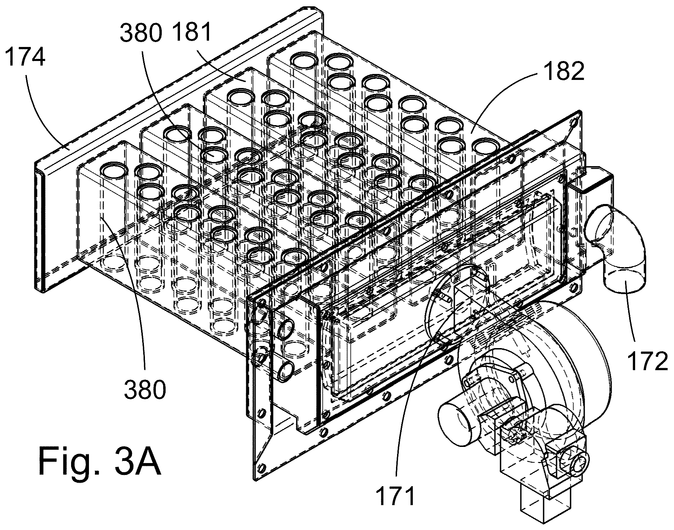

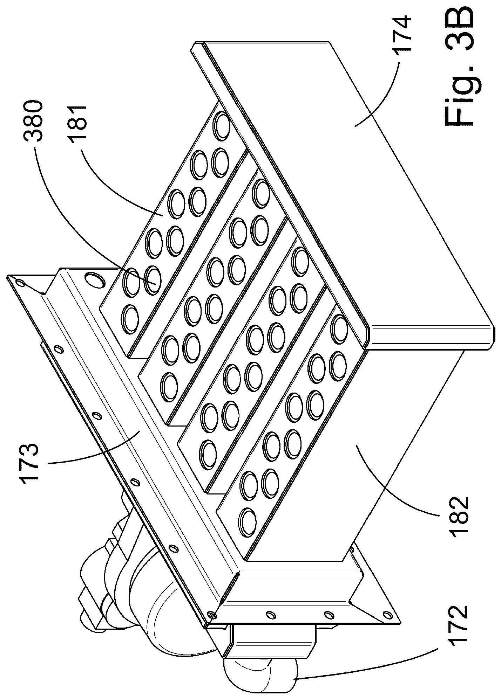

Fig. 3A and Fig. 3B show a perspective front view (indicated with hidden lines) and rear view of an alternative heating module 160 for a deep frying device 100. With this embodiment the pipes for flue gas (supply pipes 181 and outlet pipe 182) are provided with channels in the form of small vertical tubes 380 which provide for surface area enlargement and for circulation of the liquid fat in the container.

## Claims

1. A method for deep frying a food product in a deep frying device (100), wherein the deep frying device (100) is arranged for heating fat using flue gas,
wherein the deep frying device (100) comprises:
- a container (101), which container (101) comprises wall sections, which wall sections comprise at least
- a bottom wall section (110),
- a front wall section (120),
- a rear wall section (130), and
- two upright longitudinal wall sections (140) which interconnect said front wall section (120) and rear wall section (130), and
wherein the wall sections define a lumen (102) of the container (101) and the container (101) contains a fat;
wherein the container (101) comprises a main wall section selected from
- the bottom wall section (110),
- the front wall section (120),
- the rear wall section (130), and
- an upright longitudinal wall section (140);
wherein the deep frying device (100) further comprises:
- a burner (150), wherein, in order to deep fry the food product, the fat is heated using the burner (150), and the food product is deep fried in the heated fat;
wherein the deep frying device (100) further comprises:
- a heating section (160), wherein the heating section (160) comprises
- an inlet (171) for relatively hot flue gas,
- an outlet (172) for relatively cold flue gas,
- a wall unit (170),
- a pipe section (180), which protrudes from the main wall section into the lumen (102) and is not rigidly connected to the other wall sections, and wherein the pipe section (180) protruding into the lumen (102) of the container (101) comprises
- at least one supply pipe (181) for the relatively hot flue gas, and
- at least one outlet pipe (182) for the relatively cold flue gas coming from the at least one supply pipe (181);
wherein for heating the fat hot flue gas is passed via the inlet (171) of the wall unit (170) through the pipe section (180) and discharged via the outlet (172) of the wall unit (170),
wherein the heating section (160) has the form of a heating module (160) which is detachably attached to the main wall section, and
wherein the main wall section comprises a through opening and the through opening of the main wall section is closed off with the wall unit (170) of the heating section (160),
wherein the wall unit (170) of the heating section (160) comprises the outlet (172) for relatively cold flue gas,
**characterized in that** the wall unit (170) of the heating section (160) also comprises the inlet (171) for the relatively hot flue gas.

2. The method according to claim 1, wherein the heating section (160) comprises a flange (161) which is attached to the main wall section using bolts and protrudes into the main wall section into the lumen (102) via the through opening (121).

3. The method according to claim 1 or 2, wherein the main wall section is selected from
- the bottom wall section (110),
- the front wall section (120), and
- an upright longitudinal wall section (140).

4. The method according to claim 1, 2 or 3, wherein the total of the cross sectional flow surface areas of the supply pipes (181) is greater than the total cross sectional flow surface areas of the at least one outlet pipe (182).

5. The method according to claim any of the preceding claims, wherein a gasket is provided between the wall and the heating section (160).

6. The method according to claim 5, wherein the gasket is a gasket that comprises graphite.

7. The method according to any of the preceding claims, wherein the deep frying device (100) contains a further inlet (171) and a further outlet (172) for guiding flue gas at the outside of a wall section, which further inlet (171) is provided with a first connecting element and the outlet of the heating section (160) is provided with a second connecting element for detachably connecting the outlet (172) of the wall unit (170) to the first connecting element.

8. The method according to any of the preceding claims, wherein at least one supply pipe (181) of a plurality of supply pipes (181) is provided with a plurality of channels provided transverse to the longitudinal direction of the supply pipe, which channels
- extend from the outer wall of the supply pipe (181) via the inside of the supply pipe (181) to an opposite part of the outer wall of the supply pipe (181)
- comprise a first end situated relatively low and a second end situated relatively high in order to be able to pass fat from the lumen through the channel.

9. Deep frying device (100), wherein the deep frying device (100) is arranged for heating fat using flue gas,
wherein the deep frying device (100) comprises
- a container (101), which container (101) comprises wall sections, which wall sections comprise at least
- a bottom wall section (110),
- a front wall section (120),
- a rear wall section (130),
- two upright longitudinal wall sections (140) which interconnect said front wall section (120) and rear wall section (130),and
wherein the wall sections define a lumen (102) of the container (101); and the container (101) comprises a main wall section selected from
- the bottom wall section (110),
- the front wall section (120), and
- an upright longitudinal wall section (140);
wherein the deep frying device (100) further comprises:
- a burner (150),
wherein the deep frying device (100) further comprises:
- a heating section (160), wherein the heating section (160) comprises
- an inlet (171) for relatively hot flue gas,
- an outlet (172) for relatively cold flue gas,
- a wall unit (170), and
- a pipe section (180), which protrudes from the main wall section into the lumen (102) and is not rigidly connected to the other wall sections, and wherein the pipe section (180) protruding into the lumen (102) of the container (101) comprises
- at least one supply pipe (181) for the relatively hot flue gas, and
- at least one outlet pipe (182) for the relatively cold flue gas coming from the at least one supply pipe (181),
wherein the heating section (160) has the form of a heating module (160) which is detachably attached to the main wall section, and
wherein the main wall section comprises a through opening (121) and the through opening (121) of the main wall section is closed off with the wall unit (170) of the heating section (160),
wherein the wall unit (170) of the heating section (160) comprises the outlet (172) for relatively cold flue gas,
**characterized in that** the wall unit (170) of the heating section (160) also comprises the inlet (171) for the relatively hot flue gas.

10. Deep frying device (100) according to claim 9, wherein the heating section (160) comprises a flange (161) which is attached to the main wall section using bolts and protrudes into the main wall section into the lumen (102) via the through opening (121).

11. Deep frying device (100) according to claim 9 or 10, wherein the main wall section is selected from
- the bottom wall section (110),
- the front wall section (120), and
- an upright longitudinal wall section (140).

12. Deep frying device (100) according to any of the claims 9 to 11, wherein the total of the cross sectional flow surface areas of the supply pipes (181) is larger than the cross sectional flow surface areas of the outlet pipe (182).

13. Deep frying device (100) according to any of the claims 9 to 12, wherein between the wall and the heating section (160) a gasket is provided.

14. Deep frying device (100) according to any of the claims 9 to 13, wherein the gasket is a gasket that comprises graphite.

15. Deep frying device (100) according to any of the claims 9 to 14, wherein at least one supply pipe (181) of a plurality of supply pipes (181) is provided with a plurality of channels provided transverse to the longitudinal direction of the supply pipe, which channels
- extend from the outer wall of the supply pipe (181) via the inside of the supply pipe (181) to an opposite part of the outer wall of the supply pipe (181)
- comprise a first end situated relatively low and a second end situated relatively high in order to be able to pass fat from the lumen through the channel.

## Patentansprüche

1. Verfahren zum Frittieren eines Lebensmittelprodukts in einer Frittiervorrichtung (100), wobei die Frittiervorrichtung (100) zum Erhitzen von Fett mithilfe von Abgas angeordnet ist,
wobei die Frittiervorrichtung (100) Folgendes umfasst:
- einen Behälter (101), wobei der Behälter (101) Wandabschnitte umfasst, wobei die Wandabschnitte mindestens Folgendes umfassen:
- einen unteren Wandabschnitt (110),
- einen vorderen Wandabschnitt (120),
- einen hinteren Wandabschnitt (130), und
- zwei senkrechte Längswandabschnitte (140), die den vorderen Wandabschnitt (120) und den hinteren Wandabschnitt (130) verbinden, und
wobei die Wandabschnitte einen Hohlraum (102) des Behälters (101) definieren und der Behälter (101) ein Fett enthält;
wobei der Behälter (101) einen Hauptwandabschnitt umfasst, der aus Folgenden ausgewählt ist:
- dem unteren Wandabschnitt (110),
- dem vorderen Wandabschnitt (120),
- dem hinteren Wandabschnitt (130), und
- einem senkrechten Längswandabschnitt (140),
wobei die Frittiervorrichtung (100) ferner Folgendes umfasst:
- einen Brenner (150), wobei, um das Lebensmittelprodukt zu frittieren, das Fett mithilfe des Brenners (150) erhitzt wird und das Lebensmittelprodukt in dem erhitzten Fett frittiert wird;
wobei die Frittiervorrichtung (100) ferner Folgendes umfasst:
- einen Heizabschnitt (160), wobei der Heizabschnitt (160) Folgendes umfasst:
- einen Einlass (171) für relativ heißes Abgas,
- einen Auslass (172) für relativ kaltes Abgas,
- eine Wandeinheit (170),
- einen Rohrabschnitt (180), der aus dem Hauptwandabschnitt in den Hohlraum (102) ragt und nicht starr mit den anderen Wandabschnitten verbunden ist, und wobei der Rohrabschnitt (180), der in den Hohlraum (102) des Behälters (101) ragt, Folgendes umfasst:
- mindestens ein Zufuhrrohr (181) für das relativ heiße Abgas, und
- mindestens ein Auslassrohr (182) für das relativ kalte Abgas, das aus dem mindestens einen Zufuhrrohr (181) kommt;
wobei zum Erhitzen des Fetts heißes Abgas über den Einlass (171) der Wandeinheit (170) durch den Rohrabschnitt (180) geleitet wird und über den Auslass (172) der Wandeinheit (170) abgelassen wird;
wobei der Heizabschnitt (160) die Form eines Heizmoduls (160) aufweist, das abnehmbar an dem Hauptwandabschnitt angebracht wird, und
wobei der Hauptwandabschnitt eine Durchgangsöffnung umfasst und die Durchgangsöffnung des Hauptwandabschnitts mit der Wandeinheit (170) des Heizabschnitts (160) verschlossen wird,
wobei die Wandeinheit (170) des Heizabschnitts (160) einen Auslass (172) für relativ kaltes Abgas umfasst, **dadurch gekennzeichnet, dass** die Wandeinheit (170) des Heizabschnitts (160) auch den Einlass (171) für relativ heißes Abgas umfasst.

2. Verfahren nach Anspruch 1, wobei der Heizabschnitt (160) einen Flansch (161) umfasst, der unter Verwendung von Bolzen an dem Hauptwandabschnitt angebracht ist und über die Durchgangsöffnung (121) in den Hauptwandabschnitt in den Hohlraum (102) ragt.

3. Verfahren nach Anspruch 1 oder 2, wobei der Hauptwandabschnitt ausgewählt ist aus:
- dem unteren Wandabschnitt (110),
- dem vorderen Wandabschnitt (120), und
- einem senkrechten Längswandabschnitt (140).

4. Verfahren nach Anspruch 1, 2 oder 3, wobei die Gesamtheit der Querschnittsströmungsflächenbereiche der Zufuhrrohre (181) größer als die Gesamtquerschnittsströmungsflächenbereiche des mindestens einen Auslassrohrs (182) ist.

5. Verfahren nach einem der vorhergehenden Ansprüche, wobei eine Dichtung zwischen der Wand und dem Heizabschnitt (160) bereitgestellt ist.

6. Verfahren nach Anspruch 5, wobei die Dichtung eine Dichtung ist, die Graphit umfasst.

7. Verfahren nach einem der vorhergehenden Ansprüche, wobei die Frittiervorrichtung (100) einen weiteren Einlass (171) und einen weiteren Auslass (172) zum Führen von Abgas an der Außenseite eines Wandabschnitts enthält, wobei der weitere Einlass (171) mit einem ersten Verbindungselement bereitgestellt ist und der Auslass des Heizabschnitts (160) mit einem zweiten Verbindungselement zum abnehmbaren Verbinden des Auslasses (172) der Wandeinheit (170) mit dem ersten Verbindungselement bereitgestellt ist.

8. Verfahren nach einem der vorhergehenden Ansprüche, wobei mindestens ein Zufuhrrohr (181) einer Mehrzahl von Zufuhrrohren (181) mit einer Mehrzahl von Kanälen bereitgestellt ist, die quer zu der Längsrichtung des Zufuhrrohrs bereitgestellt sind, wobei die Kanäle
- sich von der Außenwand des Zufuhrrohrs (181) über das Innere des Zufuhrrohrs (181) zu einem gegenüberliegenden Teil der Außenwand des Zufuhrrohrs (181) erstrecken,
- ein erstes Ende, das relativ niedrig angeordnet ist, und ein zweites Ende, das relativ hoch angeordnet ist, um Fett von dem Hohlraum durch den Kanal leiten zu können, umfassen.

9. Frittiervorrichtung (100), wobei die Frittiervorrichtung (100) zum Erhitzen von Fett mithilfe von Abgas angeordnet ist,
wobei die Frittiervorrichtung (100) Folgendes umfasst:
- einen Behälter (101), wobei der Behälter (101) Wandabschnitte umfasst, wobei die Wandabschnitte mindestens Folgendes umfassen:
- einen unteren Wandabschnitt (110),
- einen vorderen Wandabschnitt (120),
- einen hinteren Wandabschnitt (130),
- zwei senkrechte Längswandabschnitte (140), die den vorderen Wandabschnitt (120) und den hinteren Wandabschnitt (130) verbinden, und
wobei die Wandabschnitte einen Hohlraum (102) des Behälters (101) definieren und wobei der Behälter (101) einen Hauptwandabschnitt umfasst, der ausgewählt ist aus:
- dem unteren Wandabschnitt (110),
- dem vorderen Wandabschnitt (120), und
- einem senkrechten Längswandabschnitt (140),
wobei die Frittiervorrichtung (100) ferner Folgendes umfasst:
- einen Brenner (150),
wobei die Frittiervorrichtung (100) ferner Folgendes umfasst:
- einen Heizabschnitt (160), wobei der Heizabschnitt (160) Folgendes umfasst:
- einen Einlass (171) für relativ heißes Abgas,
- einen Auslass (172) für relativ kaltes Abgas,
- eine Wandeinheit (170) und
- einen Rohrabschnitt (180), der aus dem Hauptwandabschnitt in den Hohlraum (102) ragt und nicht starr mit den anderen Wandabschnitten verbunden ist, und wobei der Rohrabschnitt (180), der in den Hohlraum (102) des Behälters (101) ragt, Folgendes umfasst:
- mindestens ein Zufuhrrohr (181) für das relativ heiße Abgas, und
- mindestens ein Auslassrohr (182) für das relativ kalte Abgas, das aus dem mindestens einen Zufuhrrohr (181) kommt,
wobei der Heizabschnitt (160) die Form eines Heizmoduls (160) aufweist, das abnehmbar an dem Hauptwandabschnitt angebracht wird, und
wobei der Hauptwandabschnitt eine Durchgangsöffnung (121) umfasst und die Durchgangsöffnung (121) des Hauptwandabschnitts mit der Wandeinheit (170) des Heizabschnitts (160) verschlossen wird,
wobei die Wandeinheit (170) des Heizabschnitts (160) einen Auslass (172) für relativ kaltes Abgas umfasst, **dadurch gekennzeichnet, dass** die Wandeinheit (170) des Heizabschnitts (160) auch den Einlass (171) für relativ heißes Abgas umfasst.

10. Frittiervorrichtung (100) nach Anspruch 9, wobei der Heizabschnitt (160) einen Flansch (161) umfasst, der unter Verwendung von Bolzen an dem Hauptwandabschnitt angebracht ist und über die Durchgangsöffnung (121) in den Hauptwandabschnitt in den Hohlraum (102) ragt.

11. Frittiervorrichtung (100) nach Anspruch 9 oder 10, wobei der Hauptwandabschnitt ausgewählt ist aus
- dem unteren Wandabschnitt (110),
- dem vorderen Wandabschnitt (120), und
- einem senkrechten Längswandabschnitt (140).

12. Frittiervorrichtung (100) nach einem der Ansprüche 9 bis 11, wobei die Gesamtheit der Querschnittsströmungsflächenbereiche der Zufuhrrohre (181) größer als die Querschnittsströmungsflächenbereiche des Auslassrohrs (182) ist.

13. Frittiervorrichtung (100) nach einem der Ansprüche 9 bis 12, wobei zwischen der Wand und dem Heizabschnitt (160) eine Dichtung bereitgestellt ist.

14. Frittiervorrichtung (100) nach einem der Ansprüche 9 bis 13, wobei die Dichtung eine Dichtung ist, die Graphit umfasst.

15. Frittiervorrichtung (100) nach einem der Ansprüche 9 bis 14, wobei mindestens ein Zufuhrrohr (181) einer Mehrzahl von Zufuhrrohren (181) mit einer Mehrzahl von Kanälen bereitgestellt ist, die quer zu der Längsrichtung des Zufuhrrohrs bereitgestellt sind, wobei die Kanäle
- sich von der Außenwand des Zufuhrrohrs (181) über das Innere des Zufuhrrohrs (181) zu einem gegenüberliegenden Teil der Außenwand des Zufuhrrohrs (181) erstrecken,
- ein erstes Ende, das relativ niedrig angeordnet ist, und ein zweites Ende, das relativ hoch angeordnet ist, um Fett von dem Hohlraum durch den Kanal leiten zu können, umfassen.

## Revendications

1. Procédé de friture d'un produit alimentaire dans un dispositif de friture (100), le dispositif de friture (100) étant conçu pour chauffer de la graisse au moyen de gaz de combustion,
le dispositif de friture (100) comprenant :
- un récipient (101), lequel récipient (101) comprend des sections de paroi, lesquelles sections de paroi comprennent au moins
- une section de paroi inférieure (110),
- une section de paroi avant (120),
- une section de paroi arrière (130), et
- deux sections de paroi longitudinales verticales (140) qui relient lesdites sections de paroi avant (120) et de paroi arrière (130), et
les sections de paroi définissant une lumière (102) du récipient (101) et le récipient (101) contenant une graisse ;
le récipient (101) comprenant une section de paroi principale sélectionnée entre
- la section de paroi inférieure (110),
- la section de paroi avant (120),
- la section de paroi arrière (130), et
- une section de paroi longitudinale verticale (140) ;
le dispositif de friture (100) comprenant en outre :
- un brûleur (150), pour frire le produit alimentaire, la graisse étant chauffée à l'aide du brûleur (150), et le produit alimentaire étant frit dans la graisse chauffée ;
le dispositif de friture (100) comprenant en outre :
- une section de chauffage (160), la section de chauffage (160) comprenant
- une entrée (171) pour les gaz de combustion relativement chauds,
- une sortie (172) pour les gaz de combustion relativement froids,
- une unité murale (170),
- une section de tuyau (180), qui fait saillie de la section de paroi principale dans la lumière (102) et
n'est pas solidarisée aux autres sections de paroi, et la section de tuyau (180) faisant saillie dans la lumière (102) du récipient (101) comprenant
- au moins un tuyau d'alimentation (181) pour les gaz de combustion relativement chauds, et
- au moins un tuyau de sortie (182) pour les gaz de combustion relativement froids provenant de l'au moins un tuyau d'alimentation (181) ;
pour chauffer la graisse, les gaz de combustion chauds passant par l'intermédiaire de l'entrée (171) de l'unité murale (170) à travers la section de tuyau (180) et étant évacués par l'intermédiaire de la sortie (172) de l'unité murale (170),
la section de chauffage (160) présentant la forme d'un module de chauffage (160) qui est fixé amovible à la section de paroi principale, et
la section de paroi principale comprenant une ouverture traversante et l'ouverture traversante de la section de paroi principale étant fermée par l'unité murale (170) de la section de chauffage (160),
l'unité murale (170) de la section de chauffage (160) comprenant la sortie (172) pour les gaz de combustion relativement froids,
**caractérisé en ce que** l'unité murale (170) de la section de chauffage (160) comprend également l'entrée (171) pour les gaz de combustion relativement chauds.

2. Procédé selon la revendication 1, la section de chauffage (160) comprenant une bride (161) qui est fixée à la section de paroi principale à l'aide de boulons et fait saillie dans la section de paroi principale dans la lumière (102) par l'intermédiaire de l'ouverture traversante (121).

3. Procédé selon la revendication 1 ou 2, la section de paroi principale étant sélectionnée entre
- la section de paroi inférieure (110),
- la section de paroi avant (120), et
- une section de paroi longitudinale verticale (140).

4. Procédé selon la revendication 1, 2 ou 3, le total des aires d'écoulement en section transversale des tuyaux d'alimentation (181) étant supérieur au total des aires d'écoulement en section transversale de l'au moins un tuyau de sortie (182).

5. Procédé selon l'une quelconque des revendications précédentes, un joint étant fourni entre la paroi et la section de chauffage (160).

6. Procédé selon la revendication 5, le joint étant un joint qui comprend du graphite.

7. Procédé selon l'une quelconque des revendications précédentes, le dispositif de friture (100) contenant une entrée (171) supplémentaire et une sortie (172) supplémentaire pour guider les gaz de combustion à l'extérieur d'une section de paroi, laquelle entrée (171) supplémentaire étant pourvue d'un premier élément de raccordement et la sortie de la section de chauffage (160) étant pourvue d'un second élément de raccordement pour raccorder amovible la sortie (172) de l'unité murale (170) au premier élément de raccordement.

8. Procédé selon l'une quelconque des revendications précédentes, au moins un tuyau d'alimentation (181) d'une pluralité de tuyaux d'alimentation (181) étant muni d'une pluralité de canaux disposés transversalement à la direction longitudinale du tuyau d'alimentation, lesquels canaux
- s'étendent de la paroi extérieure du tuyau d'alimentation (181) par l'intermédiaire de l'intérieur du tuyau d'alimentation (181) jusqu'à une partie opposée de la paroi extérieure du tuyau d'alimentation (181)
- comprennent une première extrémité située relativement bas et une seconde extrémité située relativement haut afin de pouvoir faire passer la graisse provenant de la lumière à travers le canal.

9. Dispositif de friture (100), le dispositif de friture (100) étant conçu pour chauffer de la graisse à l'aide de gaz de combustion,
le dispositif de friture (100) comprenant
- un récipient (101), lequel récipient (101) comprend des sections de paroi, lesquelles sections de paroi comprennent au moins
- une section de paroi inférieure (110),
- une section de paroi avant (120),
- une section de paroi arrière (130),
- deux sections de paroi longitudinales verticales (140) qui relient ladite section de paroi avant (120) et ladite section de paroi arrière (130), et
les sections de paroi définissant une lumière (102) du récipient (101) ; et le récipient (101) comprenant une section de paroi principale sélectionnée entre
- la section de paroi inférieure (110),
- la section de paroi avant (120), et
- une section de paroi longitudinale verticale (140) ;
le dispositif de friture (100) comprenant en outre :
- un brûleur (150),
le dispositif de friture (100) comprenant en outre :
- une section de chauffage (160), la section de chauffage (160) comprenant
- une entrée (171) pour les gaz de combustion relativement chauds,
- une sortie (172) pour les gaz de combustion relativement froids,
- une unité murale (170), et
- une section de tuyau (180), qui fait saillie de la section de paroi principale dans la lumière (102) et
n'est pas solidarisée aux autres sections de paroi, et la section de tuyau (180) faisant saillie dans la lumière (102) du récipient (101) comprenant
- au moins un tuyau d'alimentation (181) pour les gaz de combustion relativement chauds, et
- au moins un tuyau de sortie (182) pour les gaz de combustion relativement froids provenant de l'au moins un tuyau d'alimentation (181),
la section de chauffage (160) présentant la forme d'un module de chauffage (160) qui est fixé amovible à la section de paroi principale, et
la section de paroi principale comprenant une ouverture traversante (121) et l'ouverture traversante (121) de la section de paroi principale étant fermée par l'unité murale (170) de la section de chauffage (160),
l'unité murale (170) de la section de chauffage (160) comprenant la sortie (172) pour les gaz de combustion relativement froids,
**caractérisé en ce que** l'unité murale (170) de la section de chauffage (160) comprend également l'entrée (171) pour les gaz de combustion relativement chauds.

10. Dispositif de friture (100) selon la revendication 9, la section de chauffage (160) comprenant une bride (161) qui est fixée à la section de paroi principale à l'aide de boulons et fait saillie dans la section de paroi principale dans la lumière (102) par l'intermédiaire de l'ouverture traversante (121).

11. Dispositif de friture (100) selon la revendication 9 ou 10, la section de paroi principale étant sélectionnée entre
- la section de paroi inférieure (110),
- la section de paroi avant (120), et
- une section de paroi longitudinale verticale (140).

12. Dispositif de friture (100) selon l'une quelconque des revendications 9 à 11, le total des aires d'écoulement de section transversale des tuyaux d'alimentation (181) étant supérieur aux aires d'écoulement de section transversale du tuyau de sortie (182).

13. Dispositif de friture (100) selon l'une quelconque des revendications 9 à 12, un joint d'étanchéité étant fourni entre la paroi et la section de chauffage (160).

14. Dispositif de friture (100) selon l'une quelconque des revendications 9 à 13, le joint étant un joint qui comprend du graphite.

15. Dispositif de friture (100) selon l'une quelconque des revendications 9 à 14, au moins un tuyau d'alimentation (181) d'une pluralité de tuyaux d'alimentation (181) étant muni d'une pluralité de canaux disposés transversalement à la direction longitudinale du tuyau d'alimentation, lesquels canaux
- s'étendent de la paroi extérieure du tuyau d'alimentation (181) par l'intermédiaire de l'intérieur du tuyau d'alimentation (181) jusqu'à une partie opposée de la paroi extérieure du tuyau d'alimentation (181)
- comprennent une première extrémité située relativement bas et une seconde extrémité située relativement haut afin de pouvoir faire passer la graisse provenant de la lumière à travers le canal.
